## Europäisches Patentamt
## European Patent Office
## Office européen des brevets

(19)

(11) Veröffentlichungsnummer: **0 147 568**
**B1**

(12) **EUROPÄISCHE PATENTSCHRIFT**

(45) Veröffentlichungstag der Patentschrift:
25.01.89

(51) Int. Cl.⁴: **B 01 D 36/04**

(21) Anmeldenummer: **84113173.3**

(22) Anmeldetag: **02.11.84**

(54) **Filtervorrichtung.**

(30) Priorität: **10.11.83 DE 8332297 U**

(43) Veröffentlichungstag der Anmeldung:
**10.07.85 Patentblatt 85/28**

(45) Bekanntmachung des Hinweises auf die Patenterteilung:
**25.01.89 Patentblatt 89/4**

(84) Benannte Vertragsstaaten:
**AT BE CH DE FR GB IT LI NL SE**

(56) Entgegenhaltungen:
**FR-A-2 207 030**
**GB-A-178 485**
**GB-A-227 544**
**US-A-3 239 438**

(73) Patentinhaber: **Baldwin- Gegenheimer GmbH,**
**Derchinger Strasse 137, D-8900 Augsburg (DE)**

(72) Erfinder: **Hara, Akira, 2-16- 5 Hirano Kohtoh- ku,**
**Tokio 135 (JP)**

(74) Vertreter: **Munk, Ludwig, Dipl.- Ing., Patentanwalt**
**Prinzregentenstrasse 1, D-8900 Augsburg (DE)**

LIBER, STOCKHOLM 1989

EP 0 147 568 B1

**Beschreibung**

Die Erfindung betrifft eine Vorrichtung zum Filtern des Feuchtmittels von Offsetdruckmaschinen mit einer im Feuchtmittelkreislauf vorgesehenen, einen im Strömungsweg des Feuchtmittels angeordneten Filterkörper aufweisenden Gehäuse.

Die bekannten Anordnungen dieser Art sind als den Filterkörper aufnehmende Drucktöpfe ausgebildet, durch die das Feuchtmittel mittels einer Pumpe hindurchgepreßt wird. Anordnungen dieser Art erfordern einen hohen Wartungsaufwand zur Kontrolle und zum Austausch des Filterkörpers, da dieser hier schlecht zugänglich ist. Außerdem fällt hier die gesamte Verschmutzung im Bereich des Filterkörpers an, so daß sich fine sehr schnelle Verschmutzung des Filterkörpers ergeben kann, was einen häufigen Austausch erforderlich macht. Ein weiterer Nachteil der bekannten Anordnungen ist darin zu sehen, daß infolge der Druckbeaufschlagung des Filterkörpers auch Schmutzpartikel durch den Filterkörper hindurchgedrückt werden können. Die bekannten Anordnungen erweisen sich demnach als nicht bedienungsfreundlich und zuverlässig genug.

Hiervon ausgehend ist es daher die Aufgabe der vorliegenden Erfindung eine Vorrichtung eingangs erwähnter Art zu schaffen, die nicht nur eine hohe Bedienungsfreundlichkeit aufweist, sondern auch eine lange Filterlebensdauer gewährleistet und gleichzeitig eine zuverlässige Reinigung des Feuchtmittels sicherstellt.

Diese Aufgabe wird erfindungsgemäß dadurch gelöst, daß das Gehäuse als druckloser Tank ausgebildet ist, der durch Zwischenwände in mehrere Kammern unterteilt ist, von denen die erste Kammer mindestens einen in ihrem oberen Bereich angeordneten Einlaß für das Feuchtmittel aufweist und über einen bodenseitigen Spalt im Bereich der zugeordneten Zwischenwand mit einer zweiten Kammer verbunden ist, aus der ein mit seinem Eingang feuchtmitteloberflächennah angeordneter Ablaufstutzen herausgeführt ist und die über einen bodenseitigen Spalt im Bereich der nächsten Zwischenwand mit einer dritten Kammer verbunden ist, die durch ein Überlaufwehr von einer vierten Kammer abgegrenzt ist, in welcher ein im oberen Bereich des Überlaufwehrs an dieses angesetzter, den Filterkörper aufweisender, nach oben offener Filterkorb angeordnet ist und die mindestens einen bodenseitig angeordneten Auslaß aufweist.

Diese Maßnahmen ergeben in vorteilhafter Weise eine drucklose Filtervorrichtung mit der eigentlichen Filterung vorgeordneten Vorklärstationen, in denen unter der Wirkung der Schwerkraft bereits eine Vorklärung und damit eine Abtrennung eines großen Teils der Verunreinigungen stattfindet, wodurch der Filterkörper entlastet wird. In der zum Vorklärbereich gehörenden ersten Kammer erfolgt eine Entgasung der Flüssigkeit. In der ebenfalls zum Vorklärbereich gehörenden zweiten Kammer erfolgt eine Trennung zwischen Flüssigkeit und in dieser mittransportierter Farbe bzw. sonstigen Verunreinigungen. Diese bilden aufgrund ihres geringeren spezifischen Gewichts eine auf der Flüssigkeit schwimmende Schicht, die mit Hilfe des Ablaufstutzens von Zeit zu Zeit abgelassen werden kann. Da die die erfindungsgemäße Vorrichtung durchsetzende Flüssigkeit lediglich unter Schwerkraftwirkung steht, ergeben sich in vorteilhafter Weise sehr langsame Strömungsgeschwindigkeiten, was sich positiv auf die erzielbare Vorklärung auswirkt. Außerdem ist es aufgrund der drucklosen Ausführung in vorteilhafter Weise möglich, die einzelnen Kammern, soweit erforderlich, etwa durch Verwendung abnehmbarer bzw. abschwenkbarer Deckel von oben gut zugänglich auszubilden, was nicht nur eine Sichtüberwachung der Klärbecken des Vorklärbereichs, sondern auch einen leichten Austausch des Filterkörpers ermöglicht. Ein weiterer Vorteil der drucklosen Ausführung ist darin zu sehen, daß das Feuchtmittel einfach durch Schwerkraft aus den Feuchtmittelkästen der Druckmaschine ablaufen und in die erste Kammer eingeleitet werden kann, was den Aufbau vereinfacht.

In vorteilhafter Weiterbildung der übergeordneten Maßnahmen kann in der ersten Kammer ein zumindest teilweise oberhalb der Überlaufkante des Überlaufwehrs angeordnetes Prallblech vorgesehen sein. Hiermit läßt sich in vorteilhafter Weise eine Beruhigung der ersten Kammer und eine laminare, nach unten gehende Strömung des Feuchtmittels erreichen, was sich positiv auf die erwünschte Entgasung auswirkt.

Zur Vermeidung von Überdruck kann die erste Kammer, in welcher eine Entgasung stattfindet, mit einer Entlüftungsöffnung versehen sein.

In weiterer vorteilhafter Ausgestaltung der übergeordneten Maßnahmen kann im Bereich zwischen den die zweite Kammer begrenzenden Zwischenwänden eine Umlenkschikane angeordnet sein, deren unterer Rand Bodenabstand aufweist und deren oberer Rand tiefer als die obere Kante des Überlaufwehrs angeordnet ist. Hierdurch ergibt sich eine mäanderartige Umlenkung zumindest des Hauptanteils der über den bodenseitigen Spalt in die zweite Kammer eintretenden Flüssigkeit, wodurch die unter der Wirkung der Schwerkraft stattfindende, nach oben gerichtete Absetzbewegung der im Feuchtmittel mitgeführten festen Verunreinigungen, wie Farbe, Papierteilchen und dergleichen, unterstützt wird. Zweckmäßig können dabei die Schikane und der untere Rand der benachbarten ersten Zwischenwand dachförmig gegeneinander geneigt sein, so daß sich ein nach oben verjüngender Kanal ergibt, durch den die aufgrund der Schwerkraft nach oben sich absetzenden Verunreinigungen gesammelt und zuverlässig nach oben gelenkt werden.

Eine weitere zweckmäßige Maßnahme kann darin bestehen, daß die dem Filterkorb zugeordnete Kammer über einen abhebbaren Deckel zugänglich ist. Dies gestattet eine einfache Sichtkontrolle und einen leichten Austausch des Filterkörpers. Dieser kann vorteilhaft als großflächige Filtermatte ausgebildet sein, so daß trotz der drucklosen Ausführung ein ausreichender Durchsatz erreicht werden kann.

Gemäß einer weiteren vorteilhaften Ausgestaltung der übergeordneten Maßnahmen kann die vierte, dem Filterkörper zugeordnete Kammer ausgangsseitig am Saugstutzen einer schwimmergesteuerten Pumpe liegen. Hierdurch läßt sich eine unerwünschte Überflutung des Filterkörpers zuverlässig verhindern.

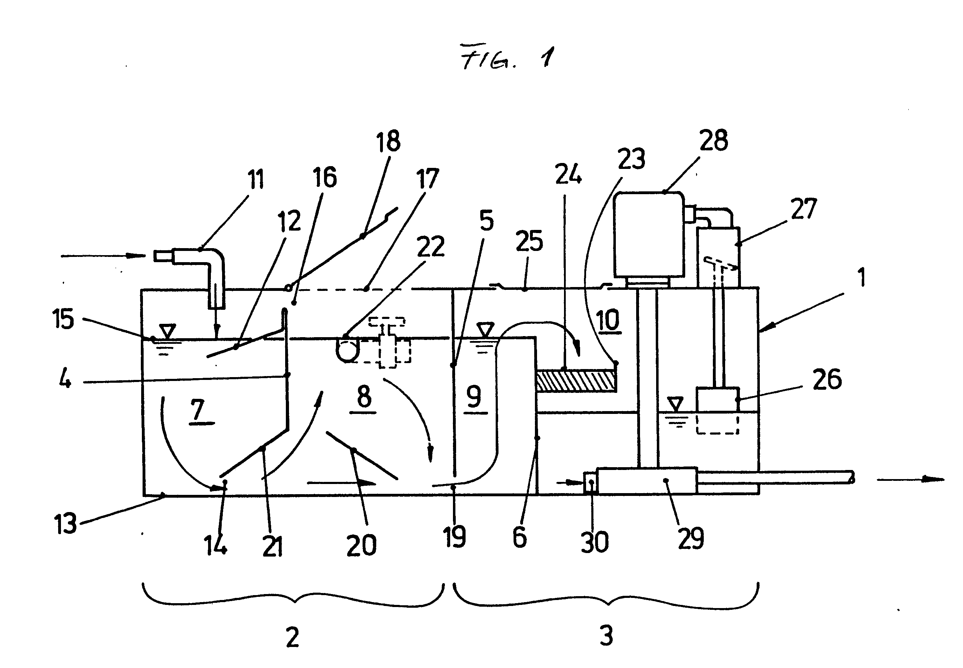

Weitere vorteilhafte Ausgestaltungen und zweckmäßige Fortbildungen der übergeordneten Maßnahmen ergeben sich aus der nachstehenden Beschreibung eines bevorzugten Ausführungsbeispiels anhand der Zeichnung in Verbindung mit den restlichen Unteransprüchen.

Die einzige Figur der Zeichnung zeigt einen Längsschnitt durch eine erfindungsgemäße Filtervorrichtung in schematischer Darstellung.

Die in der Zeichnung dargestellte Filtervorrichtung umfaßt einen in einem zumindest teilweise nach oben offenen und daher drucklosen Tank 1 untergebrachten Vorklärbereich 2 und einen diesem nachgeordneten Filterbereich 3. Der Tank 1 ist durch Zwischenwände 4 bzw. 5 bzw. 6 in mehrere, strömungsmäßig miteinander verbundene Kammern 7 bzw. 8 bzw. 9 bzw. 10 unterteilt. Die Zwischenwände 4, 5, 6 sind an den Seitenwänden des den Tank 1 bildenden Kastens festgelegt. Die beiden vorderen Kammern 7 und 8 bilden den Vorklärbereich 2, in welchem eine Klärung durch Schwerkraftwirkung stattfindet. Die Querschnitte der Kammern sind daher so bemessen, daß sich sehr kleine Strömungsgeschwindigkeiten der die Kammern durchsetzenden Flüssigkeit ergeben. Die beiden hinteren Kammern 9, 10 bilden den Filterbereich 3, in welchem die vorgeklärte Flüssigkeit einem nachgeschalteten, ebenfalls unter Schwerkraftwirkung stattfindenden Filtervorgang unterworfen wird.

Das durch Schwerkraft aus den Feuchtmittelkästen der Druckmaschine ablaufende Feuchtmittel wird in die erste Kammer 7 eingeleitet, die hierzu mit in ihrem oberen Bereich einmündenden Einlaßstutzen 11 versehen ist, an welche geeignete Schlauchleitungen anschließbar sind. Der Mündungsquerschnitt der Einlaßstutzen 11 wird durch ein Prallblech 12 untergriffen, das hier einfach als schräg nach unten geneigte, zumindest teilweise aus der Flüssigkeitsoberfläche austauchende obere Randabwinklung der ersten Zwischenwand 4 ausgebildet ist, deren unterer Rand oberhalb des Tankbodens 13 endet, so daß sich ein Spalt 14 ergibt, der eine Verbindung zur zweiten Kammer 8 darstellt. Das Prallblech 12 verhindert einen tief in die erste Kammer 7 hineinwirkenden Durchschlag der aus den Einlaßstutzen 11 austretenden Flüssigkeit und bewirkt somit eine Verlangsamung und Beruhigung der nach unten gerichteten Strömung der Flüssigkeit, die über den bodenseitigen Spalt 14 unterhalb der ersten Zwischenwand 4 in die zweite Kammer 8 hinübertreten kann. Infolge der Beruhigung in der ersten Kammer 7 erfolgt in dieser im wesentlichen eine Entgasung der Flüssigkeit, was zu Schaumbildung an der Oberfläche führt. Zur Verhinderung eines Druckaufbaus im Bereich oberhalb des Flüssigkeitsspiegels 15 ist die Kammer 7 mit Entlüftungsöffnungen versehen. Hierzu kann die Kammer 7 einfach nach oben teilweise offen sein. Im dargestellten Ausführungsbeispiel ist hierzu im Bereich des oberen Rands der ersten Zwischenwand 4 ein Spalt 16 vorgesehen, über den eine Entlüftung bzw. ein Druckabbau in die zweite Kammer 8 hinein erfolgen kann, die nach oben offen ist, was durch den in der Zeichnung gestrichelt dargestellten Öffnungsquerschnitt 17 angedeutet ist, dem ein Schwenkdeckel 18 zugeordnet sein kann.

Die zweite Kammer 8 ist über einen im Bereich des unteren Rands der zweiten Zwischenwand 5 angeordneten Spalt 19 mit der dritten Kammer 9 verbunden. Innerhalb der zweiten Kammer 8 ist eine bodennah angeordnete Umlenkschikane 20 vorgesehen, so daß sich eine mäanderartige Umlenkung der vom Spalt 14 zum Spalt 19 wandernden Flüssigkeit ergibt. Die obere Kante der Umlenkschikane 20 befindet sich dementsprechend unterhalb des Flüssigkeitsspiegels 15. Die Umlenkschikane 20 und der untere Rand 21 der ersten Zwischenwand 4 sind dachförmig gegeneinander geneigt, so daß sich ein nach oben sich verjüngender Kanal ergibt.

In der zweiten Kammer 8 erfolgt eine Trennung zwischen Flüssigkeit und mitgeführter Farbe bzw. sonstigem Schmutz aus der laufenden Papierbahn. Diese Verunreinigungen besitzen ein geringeres spezifisches Gewicht als das Feuchtmittel und setzen sich daher als Schwimmschicht auf der Flüssigkeitsoberfläche ab. Durch die Umlenkschikane 20 wird eine große Verweilzeit der Flüssigkeit in der Kammer 8 erreicht. Gleichzeitig sind die Querschnitte so bemessen, daß sich geringe Geschwindigkeiten ergeben, so daß ausreichend Zeit für eine unter der Wirkung der Schwerkraft vor sich gehende Klärung zur Verfügung steht. In die Seitenwand der Kammer 8 ist ein absperrbarer, mit seinem Eingang leicht unterhalb des Flüssigkeitsspiegels 15 angeordneter Ablaufstutzen 22 eingesetzt, über welchen die auf der Flüssigkeitsoberfläche schwimmende Schmutzschicht von Zeit zu Zeit abgelassen werden kann. Die auf der Flüssigkeitsoberfläche schwimmende Schmutzschicht kann durch den Öffnungsquerschnitt 17 hindurch beobachtet werden, so daß eine manuelle Betätigung des dem Ablaufstutzen 22 zugeordneten Absperrorgans ausreicht. Der untere Rand der Umlenkschikane 20 kann direkt an den Tankboden angesetzt sein. Im dargestellten Ausführungsbeispiel ist ein leichter Bodenabstand vorgesehen, so daß eine bodennahe und deshalb bereits weitgehend vorgeklärte Flüssigkeitsschicht umlenkungsfrei bleibt. Die hieraus nach oben austretenden Verunreinigungen werden durch die geneigte Umlenkschikane 20 gesammelt und nach oben geführt.

Die über den bodenseitigen Spalt 19 unterhalb der zweiten Zwischenwand 5 zugängliche dritte Kammer 9 bildet einen Stauraum, aus dem die Flüssigkeit durch Überlauf in die vierte Kammer 10 gelangt, wobei eine Filterung erfolgt. Hierzu ist die Zwischenwand 6 zwischen den Kammern 9 und 10 als die Höhe des Flüssigkeitsspiegels 15 bestimmendes Überlaufwehr ausgebildet, an das ein in der vierten Kammer 10 angeordneter, nach oben offener Filterkorb 23 angesetzt ist, in welchem die über die obere Kante der ein Überlaufwehr bildenden Zwischenwand 6 überlaufende Flüssigkeit aufgefangen wird. Der Filterkorb 23 ist mit einer Filtermatte 24 ausgelegt, die aus Polyurethanschaum bestehen kann, was sich als sehr kostengünstig erweist. Oberhalb des Filterkorbs 23 ist ein mittels eines abhebbaren Deckels 25 verschließbarer Öffnungsquerschnitt vorgesehen, was eine leichte Sichtkontrolle und Austauschbarkeit der Filtermatte 24 ermöglicht. Im dargestellten Ausführungsbeispiel ergeben sich demnach mehrere Öffnungsquerschnitte. Es wäre aber auch denkbar, einen durchgehenden Öffnungsquerschnitt vorzusehen.

Der Filterkorb 23 und die Filtermatte 24 reichen über die ganze Tankbreite, so daß sich eine große Filterfläche ergibt. Der Filterkorb 23 ist so hoch angeordnet, daß die gefilterte Flüssigkeit nach unten abtropfen kann. Der Flüssigkeitsstand 15a in der dem Filterkorb 23 zugeordneten Kammer 10 wird durch einen Schwimmer 26 überwacht, der einen Schalter 27 zum Ein- und Ausschalten des Antriebsmotors 28 einer Pumpe 29 betätigt, die saugseitig am Ausgang der Kammer 10 liegt und mittels der etwa ein dem Tank 1 nachgeordneter Sammelbehälter eines Kühlgeräts oder dergleichen beaufschlagbar ist. Im dargestellten Ausführungsbeispiel ist die Pumpe 29 als Tauchpumpe ausgebildet, die über eine lotrechte Welle mit dem zugeordneten Antriebsmotor 28 verbunden ist und deren Saugstutzen 30 praktisch den Ausgang der vierten Kammer 10 bildet. Der Antriebsmotor 28 der Pumpe 29 und das mit dem Antriebsmotor 28 verdrahtete Gehäuse des vom Schwimmer 26 betätigten Schalters 27 sind stationär auf einer die dem Deckel 25 zugeordnete Öffnung begrenzenden Abdeckung angeordnet.

## Patentansprüche

1. Vorrichtung zum Filtern des Feuchtmittels von Offsetdruckmaschinen mit einem im Feuchtmittelkreislauf vorgesehenen, einen im Strömungsweg des Feuchtmittels angeordneten Filterkörper aufweisenden Gehäuse, dadurch gekennzeichnet, daß das Gehäuse als druckloser Tank (1) ausgebildet ist, der durch Zwischenwände (4, 5, 6) in mehrere Kammern (7, 8, 9, 10) unterteilt ist, von denen die erste Kammer (7) mindestens einen in ihrem oberen Bereich angeordneten Einlaß (Einlaßstutzen 11) für das Feuchtmittel aufweist und über einen bodenseitigen Spalt (14) im Bereich der zugeordneten Zwischenwand (4) mit einer zweiten Kammer (8) verbunden ist, aus der ein mit seinem Eingang feuchtmitteloberflächennah angeordneter Ablaufstutzen (22) herausgeführt ist und die über einen bodenseitigen Spalt (19) im Bereich der weiteren Zwischenwand (5) mit einer dritten Kammer (9) verbunden ist, die durch ein Überlaufwehr (Zwischenwand 6) von einer vierten Kammer (10) abgegrenzt ist, in welcher ein im oberen Bereich des Überlaufwehrs an dieses angesetzter, den Filterkörper (Filtermatte 24) aufweisender, nach oben offener Filterkorb (23) angeordnet ist und die mindestens einen bodenseitig angeordneten Auslaß (Saugstutzen 30) aufweist.

2. Vorrichtung nach Anspruch 1, dadurch gekennzeichnet, daß in der ersten Kammer (7) ein zumindest teilweise aus dem Flüssigkeitsspiegel (15) austauchendes Prallblech (12) vorgesehen ist, das vorzugsweise als schräg nach unten geneigte Randabwinklung der ersten Zwischenwand ausgebildet ist.

3. Vorrichtung nach einem der vorhergehenden Ansprüche, dadurch gekennzeichnet, daß die erste Kammer (7) mit einer Entlüftungsöffnung versehen ist.

4. Vorrichtung nach Anspruch 3, dadurch gekennzeichnet, daß die oberhalb des Flüssigkeitsspiegels (15) liegenden Bereiche der ersten Kammer (7) und der zweiten Kammer (8) über einen Spalt (16) im Bereich der Oberkante der zwischen diesen Kammern vorgesehenen Zwischenwand (4) miteinander verbunden sind und daß mindestens ein der zweiten Kammer (8) zugeordneter, vorzugsweise mittels eines Deckels (18) abdeckbarer Öffnungsquerschnitt (17) vorgesehen ist.

5. Vorrichtung nach einem der vorhergehenden Ansprüche, dadurch gekennzeichnet, daß im Bereich zwischen den die zweite Kammer (8) begrenzenden Zwischenwänden (4, 5) eine Umlenkschikane (20) angeordnet ist, deren unterer Rand vorzugsweise Bodenabstand aufweist und deren oberer Rand untehalb des Flüssigkeitsspiegels (15) liegt.

6. Vorrichtung nach Anspruch 5, dadurch gekennzeichnet, daß die Umlenkschikane (20) und der untere Rand (21) der benachbarten ersten Zwischenwand (4) dachförmig gegeneinander geneigt sind und einen nach oben sich verjüngenden Kanal begrenzen.

7. Vorrichtung nach einem der vorhergehenden Ansprüche, dadurch gekennzeichnet, daß der aus der zweiten Kammer (8) herausführende Ablaufstutzen (22) absperrbar ist.

8. Vorrichtung nach einem der vorhergehenden Ansprüche, dadurch gekennzeichnet, daß zumindest die dem Filterkorb (23) zugeordnete Kammer (10) über einen vorzugsweise mittels eines Deckels (25) abdeckbaren, oberhalb des Filterkorbs (23) angeordneten Öffnungsquerschnitt zugänglich ist.

9. Vorrichtung nach einem der vorhergehenden Ansprüche, dadurch gekennzeichnet, daß der Filterkörper als vorzugsweise aus Polyurethan bestehende Filtermatte (24) ausgebildet ist.

10. Vorrichtung nach einem der vorhergehenden Ansprüche, dadurch gekennzeichnet, daß der Auslaß der den Filterkorb (23) aufnehmenden Kammer (10) am Saugstutzen (30) einer mittels eines in der Kammer (10) angeordneten, Schwimmers (26) steuerbaren Pumpe (29) liegt, die vorzugsweise als Tauchpumpe ausgebildet ist, die über eine lotrechte Welle mit einem auf einer da Kammer (10) zugeordneten Abdeckung aufgesetzten Antriebsmotor (28) verbunden ist, dem ein mittels des Schwimmers (26) betätigbarer, ebenfalls auf der Abdeckung angeordneter Schalter (27) zugeordnet ist.

## Claims

1. A device for filtering the dampening fluid of offset litho presses comprising a housing provided in the dampening fluid circuit to contain a filter member arranged in the path of the dampening fluid, characterized in that the housing is in the form of a pressurefree tank (1), which is subdivided by partitions (4, 5 and 6) into a plurality of chambers (7, 8, 9 and 10), of which the first chamber has at least one inlet (inlet pipe 11) arranged in its upper part, for the dampening fluid and is connected via a gap (14) near the floor adjacent to the associated partition (4) with a second chamber (8), from which there extends a drain pipe (22) having its inlet arranged near the surface of the dampening fluid, and which is connected via a gap (19) near the floor adjacent to the further partition (5) with a third chamber (9), which is delimited by an overflow weir (partition 6) from a fourth chamber (10), in which there is arranged a filter basket (23) which is upwardly open, has the filter member (the filter pad 24) and is mounted on the weir in the upper part thereof, and which has at least one outlet (intake pipe 30) arranged near the floor.

2. The device gas claimed in claim 1, characterized in that there is at a sheet metal baffle (12) at least partly under the level of the fluid in the first chamber (7), such baffle (12) being preferably in the form of a downwardly bent edge part of the first partition.

3. The device as claimed in any one of the preceding claims characterized in that the first chamber (7) is provided with a venting opening.

4. The device as claimed in claim 3, characterized in that the parts of the first chamber (7) above the surface (15) of the fluid and of the second chamber (8) are connected together via a gap (16) adjacent to the upper edge of the partition provided between these chambers and in that there is at least one opening (17) for the second chamber (8) which may be preferably shut by means of a lid (18).

5. The device as claimed in any one of the preceding claims, characterized in that in the part between the partitions (4 and 5) delimiting the second chamber (8) there is a deflecting baffle (20), whose lower edge is preferably spaced from the floor and whose upper edge is under the surface of the fluid (15).

6. The device as claimed in claim 5, characterized in that the deflecting baffle (20) and the lower edge (21) of the adjacent first partition (4) are inclined towards each other like a roof and define an upwardly tapering duct.

7. The device as claimed in any one of the preceding claims, characterized in that the drain pipe (22) running out of the second chamber (8) is able to be shut off.

8. The device as claimed in any one of the preceding claims, characterized in that at least the chamber (10) with the filter basket (23) is accessible via an opening which is preferably able to be closed by a lid (25) and is arranged above the filter basket (23).

9. The device as claimed in any one of the preceding claims, characterized in that the filter basket is constructed as a filter pad (24) preferably made of urethane.

10. The device as claimed in any one of the preceding claims, characterized in that the outlet of the chamber (10) with the filter basket (23) therein is connected with the intake pipe of a pump (29) operated by a float (26) arranged in the chamber (10), such pump preferably being in the form of a submerged pump, which is connected via a vertical shaft with a drive motor (28) mounted on a cover of the chamber (10), such drive motor having a switch (27) operated by the float and mounted on the cover.

## Revendications

1. Dispositif en vue de filtrer l'agent mouillant de machines d'impression en offset, ce dispositif étant pourvu d'un logement prévu dans le circuit de l'agent mouillant et comportant un corps de filtration disposé dans le parcours d'écoulement de cet agent mouillant, caractérisé en ce que le logement est réalisé sous forme d'une cuve sans pression (1) qui est subdivisée, par des cloisons (4, 5, 6), en plusieurs chambres (7, 8, 9, 10) dont la première (7) comporte au moins une admission (tubulure d'admission (11)) disposée dans sa zone supérieure pour l'agent mouillant et qui est reliée, via un espace libre (14) situé du côté du fond dans la zone de la cloison (4) qui y est attribuée, à une deuxième chambre (8) de laquelle ressort une tubulure d'évacuation (22) dont l'entrée est disposée à proximité de la surface de l'agent mouillant, et qui, via un espace libre (19) situé du côté du fond, est reliée, dans la zone de la cloison suivante (5) à une troisième chambre (9) qui, via un trop-plein (cloison 6), est délimitée par une quatrième chambre (10) dans laquelle est dispose un panier filtrant (23) ouvert vers le haut, comportant le corps de filtration (matelas filtrant 24) et adapté au trop-plein dans la zone supérieure de ce dernier et comportant au moins une évacuation (tubulure d'aspiration 30) adaptée dans le fond.

2. Dispositif selon la revendication 1, caractérisé en ce que, dans la première chambre (7), on prévoit une chicane (12) assurant un échange au moins partiel à partir du niveau de liquide (15) et réalisée, de préférence, sous forme d'un coude marginal incliné en oblique vers le bas de la première cloison.

3. Dispositif selon une des revendications précédentes, caractérisé en ce que la première chambre (7) est pourvue d'une ouverture d'évacuation d'air.

4. Dispositif selon la revendication 3, caractérisé en ce que les zones de la première chambre (7) et de la deuxième chambre (8), qui sont situées au-dessus du niveau de liquide (15), sont reliées l'une à l'autre via un espace libre (16) dans la zone du bord supérieur de la cloison (4) prévue entre ces chambres et en ce qu'on prévoit au moins une section transversale d'ouverture (17) attribuée à la deuxième chambre (8) et pouvant être recouverte, de préférence, au moyen d'un couvercle (18).

5. Dispositif selon une des revendications précédentes, caractérisé en ce que, dans la zone située entre les cloisons (4, 5) délimitant la deuxième chambre (8), on dispose une chicane de déviation (20) dont le bord inférieur est, de préférence, situé à distance du fond et dont le bord supérieur est situé en dessous du niveau de liquide (15).

6. Dispositif selon la revendication 5, caractérisé en ce que la chicane de déviation (20) et le bord inférieur (21) de la première cloison voisine (4) sont inclinés l'un vers l'autre en forme de toit et délimitent un canal se rétrécissant vers le haut.

7. Dispositif selon une des revendications précédentes, caractérisé en ce que la tubulure d'évacuation (22) sortant de la deuxième chambre (8) peut être bloquée.

8. Dispositif selon une des revendications précédentes, caractérisé en ce qu'au moins la chambre (10) attribuée au panier de filtration (23) est accessible à l'intervention d'une section transversale d'ouverture pouvant être recouverte, de préférence, au moyen d'un couvercle (25) et disposée au-dessus du panier de filtration (23).

9. Dispositif selon une des revendications précédentes, caractérisé en ce que le corps de filtration est réalisé, de préférence, en un matelas filtrant (24) constitué de polyuréthane.

10. Dispositif selon une des revendications précédentes, caractérisé en ce que l'évacuation de la chambre (10) dans laquelle est logé le panier filtrant (23), est située à la tubulure d'aspiration (30) d'une pompe (29) pouvant être commandée au moyen d'un flotteur (26) disposé dans la chambre (10), cette pompe étant réalisée, de préférence, sous forme d'une pompe plongeante qui est reliée, par un arbre vertical, à un moteur de commande (28) placé sur un recouvrement attribué à la chambre (10) et auquel est attribué un commutateur (27) pouvant être actionné au moyen du flotteur (26) et également disposé sur le recouvrement précité.

FIG. 1

EP 0 147 568 B1